# FASCICULE DE BREVET EUROPEEN

(11) **EP 3 768 540 B1**
(45) Date de publication et mention de la délivrance du brevet: **26.06.2024**
(21) Numéro de dépôt: 19790041.8
(22) Date de dépôt: 17.05.2019
(51) Int. Cl.: B60K 11/04

(54) **DISPOSITIF DE VENTILATION D'UN VÉHICULE AUTOMOBILE**
BELÜFTUNGSVORRICHTUNG FÜR EIN KRAFTFAHRZEUG
VENTILATION DEVICE OF A MOTOR VEHICLE

(30) Priorité: 22.05.2018 FR 1854253
(43) Date de publication de la demande: 27.01.2021
(73) Titulaire: Valeo Systemes Thermiques, 78322 Le Mesnil Saint Denis Cedex (FR)
(72) Inventeur: NAJI, Said, 78322 LE MESNIL SAINT DENIS CEDEX (FR); STROEHLA, Ralph, 96476 Bad Rodach (DE); WACHTER, Clemens, 96476 Bad Rodach (DE)
(74) Mandataire: Valeo Systèmes Thermiques
(86) Numéro de dépôt international: PCT/FR2019/051129
(87) Numéro de publication internationale: WO 2019/224460

(56) Documents cités:
- CN-A- 105 508 015
- US-A1- 2015 176 605

## Description

La présente invention a trait au domaine du refroidissement des moteurs de véhicule automobile, notamment concerne un dispositif de ventilation d'un véhicule automobile.

Un véhicule automobile est couramment équipé de systèmes de refroidissement disposés dans son compartiment moteur. Le moteur thermique est ainsi refroidi par un apport d'air extérieur. Cet air extérieur permet de refroidir, via des échangeurs thermiques, un fluide circulant par ailleurs dans une boucle thermique du véhicule.

Ces systèmes de refroidissement, également appelés « unités de refroidissement » comprennent le plus souvent au moins un orifice d'entrée de l'air extérieur généralement disposé sur la carrosserie du véhicule, et par exemple au niveau de la face avant du véhicule, un ou plusieurs échangeurs de chaleur agencés sur le trajet de l'air entrant ainsi qu'un groupe moto-ventilateur permettant de forcer l'arrivée d'air par exemple lorsque le véhicule est à l'arrêt.

La position de chacun des composants de ces unités de refroidissement est prédéterminée et doit être respectée afin d'assurer le bon fonctionnement de ces unités de refroidissement. Par exemple, le groupe moto-ventilateur doit être disposé à une distance suffisamment éloignée des échangeurs de chaleur afin d'optimiser le fonctionnement de ces derniers.

De manière connue, les composants de ces unités de refroidissement sont montés les uns après les autres sur des pièces de structure du compartiment moteur.

Par ailleurs le bruit tonal ou le bruit harmonique généré par la circulation forcée d'air, notamment lorsque le groupe moto-ventilateur est activé, est indésirable pour les passagers du véhicule automobile. Ces bruits peuvent être entendus à l'extérieur ou à l'intérieur du véhicule.

Ce bruit est notamment dû à des pales de ventilateur brassant de l'air trop près des bras qui portent le groupe moto-ventilateur.

Le demandeur a constaté que, lorsqu'une pale passe à proximité des bras, le flux d'air crée des turbulences autour des bras. Ces turbulences sont la source du bruit.

Le demandeur a constaté que le niveau du bruit dépend notamment de la vitesse du flux d'air et de la distance entre les pales et les bras. La fréquence du bruit dépend notamment du nombre de bras.

Il serait possible de réduire le bruit selon différentes manières.

Par exemple, il serait possible d'augmenter la distance entre les bras et les pales, mais cela augmenterait l'encombrement du dispositif, ce qui n'est acceptable pour beaucoup de constructeurs automobiles.

Il serait également possible d'augmenter le nombre de pales pour distribuer l'énergie par pale, mais cela augmenterait les coûts et par ailleurs les performances du flux d'air peuvent êtres affectées.

Enfin il serait possible de réduire le nombre de bras ou changer la forme des bras mais cela pourrait créer des défauts de tenue mécanique. Ceci est notamment connu des documents CN 105 508 015 A et US 2015/176605 A1.

Le demandeur a constaté qu'un nouvelle approche est possible qui évite les inconvénients ci-dessus.
- L'invention a ainsi pour objet un dispositif de ventilation d'un véhicule automobile selon la revendication 1.

L'invention permet de réduire le bruit, notamment le bruit tonal, sans avoir à modifier les autres performances du dispositif de ventilation. Comme le bruit est généré par les turbulences notamment autour du ou des bras, réduire les turbulences permet de réduire le bruit.

Il n'est pas nécessaire d'augmenter le nombre de pales ou de réduire le nombre de bras.

Le nombre de bras peut par exemple être inférieur ou égal à 6.

Selon l'un des aspects de l'invention, le bouclier anti-turbulences est placé dans le passage d'air en un endroit choisi de manière à empêcher des turbulences de se former, ces turbulences seraient alors si elles n'étaient pas empêchées, parmi celles de plus grandes amplitudes dans ce passage d'air. Ces zones correspondent également à des zones de fortes vitesses de flux d'air.

Avantageusement le ou les boucliers occupent une superficie totale inférieure à 20%, voire inférieure à 10%, voire 5%, de la superficie totale du passage d'air, afin de ne pas affecter les performances du dispositif de ventilation.

Selon l'un des aspects de l'invention, le dispositif de ventilation comportant un support de groupe moto-ventilateur, ce support comportant au moins un bras de maintien mécanique du moteur, le bouclier est agencé pour empêcher des turbulences de se former au contact de ce bras.

Selon l'un des aspects de l'invention, le bouclier anti-turbulences est formé sur le support de groupe moto-ventilateur.

Selon l'un des aspects de l'invention, le bouclier anti-turbulences est rapporté, puis fixé par exemple par encliquetage ou montage à force, sur le support de groupe moto-ventilateur. Ainsi le bouclier anti-turbulences est une pièce distincte du support.

Selon l'un des aspects de l'invention, le bouclier anti-turbulences est placé en amont d'un radiateur, qui est lui-même placé en amont du ventilateur.

Selon l'un des aspects de l'invention, le bouclier anti-turbulences est placé entre un échangeur de chaleur, notamment un radiateur, et un ventilateur.

Selon l'un des aspects de l'invention, le bouclier anti-turbulences est placé en aval d'un ventilateur, notamment entre le ventilateur et le support de groupe moto-ventilateur.

Selon l'un des aspects de l'invention, le bouclier anti-turbulences est placé en aval du support de groupe moto-ventilateur.

Selon l'un des aspects de l'invention, ces bras sont équi-angulairement répartis. En variante, les bras sont espacés avec des écarts angulaires variables.

Selon l'un des aspects de l'invention, le support est réalisé d'un seul tenant, notamment par moulage.

Selon l'un des aspects de l'invention, le logement comporte un anneau pour recevoir le groupe moto-ventilateur.

Selon l'un des aspects de l'invention, les bras se raccordent à l'anneau.

Selon l'un des aspects de l'invention, les bras sont sensiblement rectilignes ou courbes.

Selon l'un des aspects de l'invention, certains bras seulement sont munis d'un bouclier, les autres en étant dépourvus. Ceux-là sont par exemple de largeur sensiblement constante tout le long. Ces bras sont des bras conventionnels.

Selon l'un des aspects de l'invention, le bouclier anti-turbulences est disposé au partiellement dans cette ouverture.

En variante, le bouclier est distant de cette bordure.

Selon l'un des aspects de l'invention, le bouclier est adjacent à l'un des bras, et également adjacent à la bordure.

Selon l'un des aspects de l'invention, le bouclier s'étend radialement dans l'ouverture sur une distance d'au plus la moitié de la longueur du bras, notamment au plus 114, voire 1/5 ou 1/8 de la longueur du bras.

Selon l'un des aspects de l'invention, le bouclier comporte une face s'opposant à la circulation du flux d'air.

Selon l'un des aspects de l'invention, cette face s'étend sensiblement dans un plan parallèle au plan de l'ouverture.

Selon l'un des aspects de l'invention, cette face pourrait optionnellement présenter forme au moins localement bombée par rapport au plan de l'ouverture.

Selon l'un des aspects de l'invention, le bras comprend un côté pourvu de nervures de renfort et le bouclier qui présente une forme de languette, se raccord à ce coté du bras qui est muni de nervures de renfort.

Selon l'un des aspects de l'invention, le bouclier comporte un décrochement qui se raccorde sur un côté du bras.

Selon l'un des aspects de l'invention, le bouclier présente une forme sensiblement choisie parmi : circulaire, polygonale, rectangulaire, carré ou toute autre forme.

Selon l'un des aspects de l'invention, le bouclier est adjacent à une nervure annulaire, qui est notamment parallèle à l'axe transversale de l'ouverture, le long de la bordure de cette ouverture.

Selon l'un des aspects de l'invention, il est prévu une nervure annulaire, qui est notamment parallèle à l'axe transversale de l'ouverture et s'étend le long de la bordure de cette ouverture, cette nervure présentant une hauteur surélevée, ou non, pour avoir un bon compromis entre des performance acoustiques et les performances aérauliques.

Selon l'un des aspects de l'invention, la largeur du bouclier est notamment au moins égale à la dimension du plus gros bras.

Selon l'un des aspects de l'invention, le bouclier est à une distance au moins égale à la distance entre le bras et les pales du ventilateur.

Selon l'un des aspects de l'invention, cette nervure surélevée est notamment plus élevée en hauteur qu'une nervure concentrique voisine, de rayon plus grand.

Selon l'un des aspects de l'invention, le bouclier est formé d'un seul tenant avec la région transversale et/ou l'un des bras.

Selon l'un des aspects de l'invention, le bouclier peut avoir une forme quelconque.

Sa largeur est notamment au moins égale à la largeur du bras plus au moins 5%.

Sa longueur peut être comprise entre 5 % et 100 % de la longueur du bras.

Son épaisseur est une caractéristique relativement moins importante.

L'invention a encore pour objet un procédé pour empêcher des turbulences de se former, ce procédé comportant l'étape suivante :
- fournir un bouclier anti-turbulences de manière à empêcher des turbulences de se former dans un passage d'air d'un dispositif de ventilation d'un véhicule automobile selon la revendication 1.

Selon l'un des aspects de l'invention, le procédé comporte l'étape suivante :
- identifier une ou plusieurs zones de fortes turbulences et de fortes vitesses d'air dans le passage d'air forcé, par exemple par simulation numérique ou par test réel,
- placer dans cette ou ces zones au moins un bouclier anti-turbulences de manière à empêcher des turbulences de se former ou à limiter ces turbulences dans cette zone ou ces zones, de manière à réduire le bruit généré par la circulation d'air.

Selon l'un des aspects de l'invention, le dispositif de ventilation comportant un boîtier, configuré pour être traversé par un flux d'air entrant dans le véhicule, et au moins un échangeur de chaleur logé dans le boîtier. Ce boîtier comporte une pluralité de parois périphériques et au moins une paroi de fermeture disposée par exemple perpendiculairement à un bord d'extrémité verticale de ces parois périphériques pour former un logement d'encapsulage de l'au moins un échangeur de chaleur. La paroi de fermeture et une des parois périphériques forment une pièce monobloc.

On entend par « monobloc » le fait que ces deux parois forment un unique ensemble ne pouvant être séparé sans occasionner de détérioration d'au moins une des deux parois. Autrement dit, ces deux parois assurent une continuité de matière. Ainsi les éventuelles fuites qui pourraient être liées à mauvaise liaison entre la paroi périphérique du boîtier et sa paroi de fermeture sont réduites, permettant d'obtenir un meilleur rendement de ces unités de refroidissement et par conséquent permettant de diminuer la taille des échangeurs de chaleur encapsulés dans les boîtiers de ces unités de refroidissement.

D'autres caractéristiques, détails et avantages de la présente invention ressortiront plus clairement à la lecture de la description détaillée donnée ci-après à titre indicatif, en relation avec les différents exemples de réalisation de l'invention illustrés sur les figures suivantes :
- la figure 1 est une vue en éclaté d'une unité de refroidissement d'un compartiment moteur, avec un dispositif de ventilation, unité dans laquelle on a rendu visible un dispositif de régulation de l'arrivée d'air extérieur dans cette unité de refroidissement, un condenseur, un radiateur et un carénage configuré pour porter un groupe moto-ventilateur,
- les figures 2 à 6 représentent différentes vues du support de groupe moto-ventilateur,
- la figure 7 est une vue d'une variante non couverte par la revendication 1.

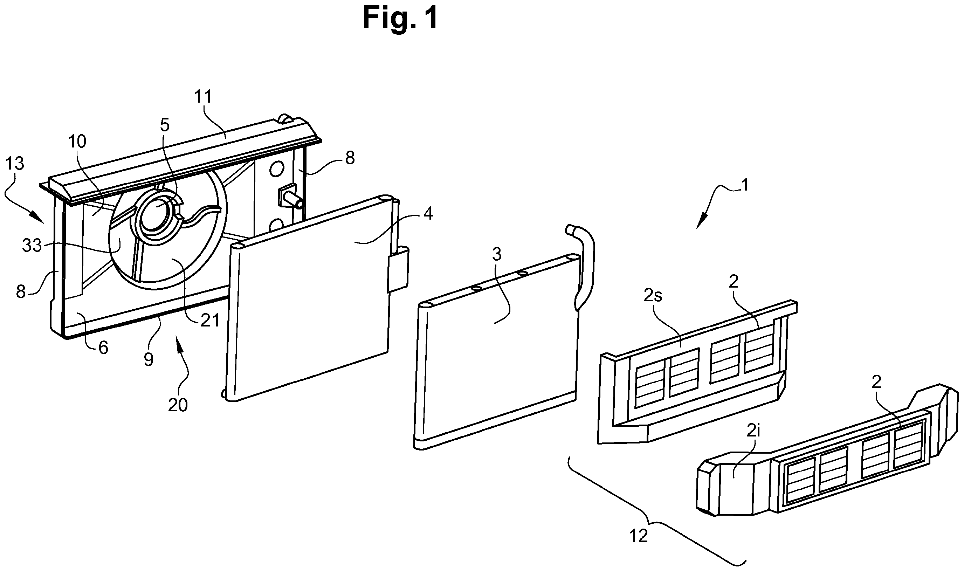

Sur la figure 1 sont illustrés différents éléments pouvant être compris dans une unité de refroidissement 1 destinée à être intégrée dans un compartiment moteur d'un véhicule selon la présente invention. Une telle unité de refroidissement 1 peut notamment comprendre au moins un dispositif 2 de régulation de l'arrivée d'air dans l'unité de refroidissement 1, un ou plusieurs échangeurs de chaleur empilés parmi lesquels à titre d'exemple non limitatif un condenseur 3 et un radiateur 4, et au moins un groupe moto-ventilateur 5.

Le dispositif 2 de régulation de l'arrivée d'air peut par exemple être réalisé par une calandre 2s, 2i à volets réglables tel qu'illustré à la figure 1. Cette calandre 2s, 2i comprend une partie supérieure 2s et une partie inférieure 2i fixées l'une sur l'autre et en décrochage l'une par rapport à l'autre. Ce décrochage peut notamment permettre de disposer un échangeur de chaleur supplémentaire.

Selon un mode de réalisation de la présente invention, l'unité de refroidissement 1 peut comprendre un premier échangeur de chaleur formé par un condenseur 3 et un deuxième échangeur de chaleur formé par un radiateur 4. Le radiateur 4 permet le refroidissement du moteur thermique via un échange entre l'air extérieur et un liquide de refroidissement circulant dans ce radiateur 4 tandis que le condenseur 3 est un élément d'un circuit de climatisation avec un réseau d'échange entre l'air frais entrant et un fluide frigorigène.

Le groupe moto-ventilateur 5 peut quant à lui être intégré dans un carénage 6 et permet de forcer l'arrivée d'air dans l'unité de refroidissement 1 lorsque cette arrivée d'air n'est plus suffisante, par exemple dans des situations dans lesquelles le véhicule est à l'arrêt ou au moins ralenti, perturbant alors cette arrivée d'air.

Ce carénage 6 peut présenter deux renvois latéraux 8, un bord inférieur 9 et une paroi 10 de fond dans laquelle est intégré le groupe moto-ventilateur 5.

Selon la présente invention, les échangeurs de chaleur 3, 4, peuvent être encapsulés dans un boîtier de l'unité de refroidissement que participe à former d'une part la calandre 2s, 2i porteuse du dispositif 2 de régulation de l'arrivée d'air et d'autre part le carénage 6 intégrant le groupe moto-ventilateur 5.

Plus particulièrement, ce boîtier présente au moins une paroi de fermeture 11 qui vient recouvrir ou fermer un volume dans lequel sont logés les échangeurs thermiques et qui est défini par l'agencement de quatre parois périphériques, à savoir : une paroi transversale avant 12, une paroi transversale arrière 13, ces parois transversales avant et arrière 12, 13 étant agencées en travers d'un flux d'air entrant dans le véhicule, et deux parois longitudinales gauche et droite non illustrées ici.

Le flux d'air entrant dans le véhicule traverse ainsi successivement la paroi transversale avant 12 du boîtier, un ou plusieurs échangeurs de chaleur 3, 4 empilés et enfin la paroi transversale arrière 13 du boîtier.

La paroi transversale avant 12 du boîtier correspond à la calandre 2s, 2i dans laquelle peut être intégré le dispositif 2 de régulation de l'arrivée d'air et la paroi transversale arrière 13 du boîtier porte le groupe moto-ventilateur 5.

La paroi transversale arrière 13 du boîtier peut notamment être réalisée par la paroi 10 de fond du carénage 6, de sorte que conformément à ce qui précède, la paroi transversale arrière peut être prolongée perpendiculairement à ses bords par deux renvois latéraux 8 et un bord inférieur 9.

Un dispositif de ventilation 20 comprend la paroi transversale arrière 13 et le groupe moto-ventilateur 5.

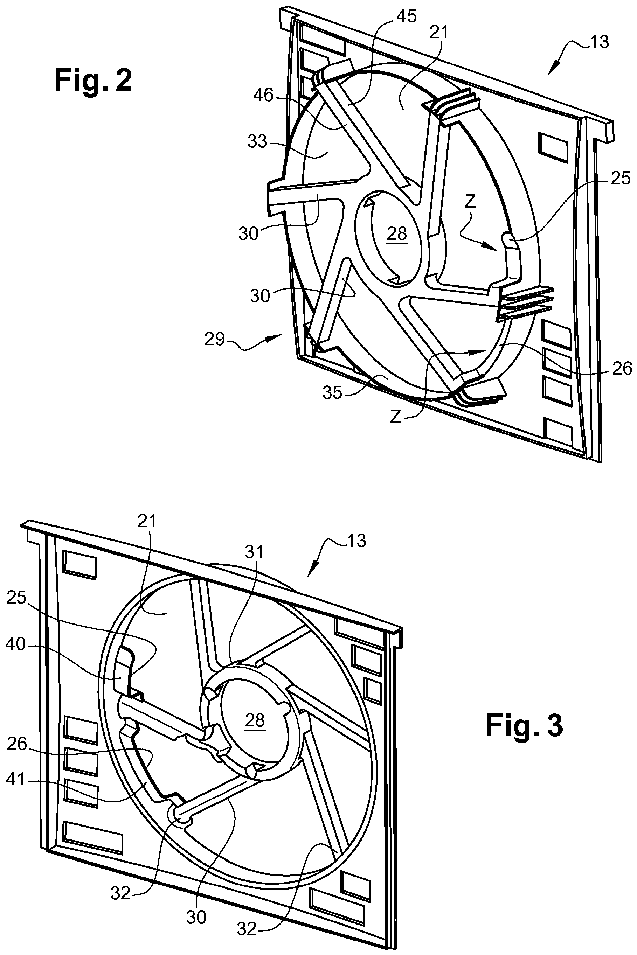

Comme illustré sur les figures 2 et 3 notamment, ce dispositif 20 comporte :
- un passage d'air 21 pour de l'air mis en mouvement forcé, par aspiration par des pales non représentées du groupe moto-ventilateur 5,
- des boucliers anti-turbulences 25 et 26 agencés pour être placés dans le passage d'air 21 en des endroits, ou zones, Z choisis de manière à empêcher des turbulences de se former.

Ces zones Z sont choisies de manière à empêcher des turbulences de se former, ces turbulences seraient alors si elles n'étaient pas empêchées, parmi celles de plus grandes amplitudes dans ce passage d'air. Ces zones correspondent également à des zones de fortes vitesses de flux d'air.

Les boucliers 25 et 26 occupent une superficie totale inférieure à 5% de la superficie totale du passage d'air, afin de ne pas affecter les performances du dispositif de ventilation.

La paroi transversale arrière 13 forme un support 13 de groupe moto-ventilateur. Ce support 13, ou paroi 13, comporte au moins un bras de maintien mécanique du moteur, le bouclier est agencé pour empêcher des turbulences de se former au contact de ce bras.

Les boucliers anti-turbulences 25 et 26 sont formés sur le support 13 de groupe moto-ventilateur.

Le support 13 comporte en outre :
- un logement 28 pour recevoir le groupe moto-ventilateur,
- une région périphérique 29,
- six bras 30 reliant le logement 28 à la région périphérique 29.

Ces bras 30 sont équi-angulairement répartis ou non autour du logement 28.

Le support 13 est réalisé d'un seul tenant, notamment par moulage d'une matière plastique. En variante, le support 13 peut être une pièce rapportée.

Le logement 28 comporte un anneau 31 pour recevoir le groupe moto-ventilateur5 et les bras 30 se raccordent à l'anneau 31.

Les bras 30 sont sensiblement rectilignes et comportent un évasement 32 à la base de jonction entre chaque bras et la région périphérique 29.

La région périphérique 29 définit une ouverture 33 de forme sensiblement circulaire pour le passage d'air 21 et le logement pour le groupe moto-ventilateur est disposé sensiblement au centre de cette ouverture.

Les boucliers anti-turbulences 25 et 26 sont disposés au partiellement dans cette ouverture 33 et donc dans le passage d'air 21.

Cette ouverture 33 présente une bordure circulaire 35, et les boucliers 25 et 26 sont adjacents à cette bordure 35.

Les boucliers 25 et 26 sont disposés entre deux bras consécutifs 30 et sont adjacents à l'un des bras 30, et également adjacent à la bordure 35.

Les boucliers 25 et 26 s'étendent radialement dans l'ouverture sur une distance d'au plus la moitié de la longueur du bras, notamment au plus 1/5 ou 1/8 de la longueur du bras 30, longueur mesurée depuis l'anneau 31 jusqu'à la bordure 35.

Comme illustré sur la figure 3, les boucliers 25 et 25 comportent chacun une face 40 et 41 respectivement s'opposant à la circulation du flux d'air.

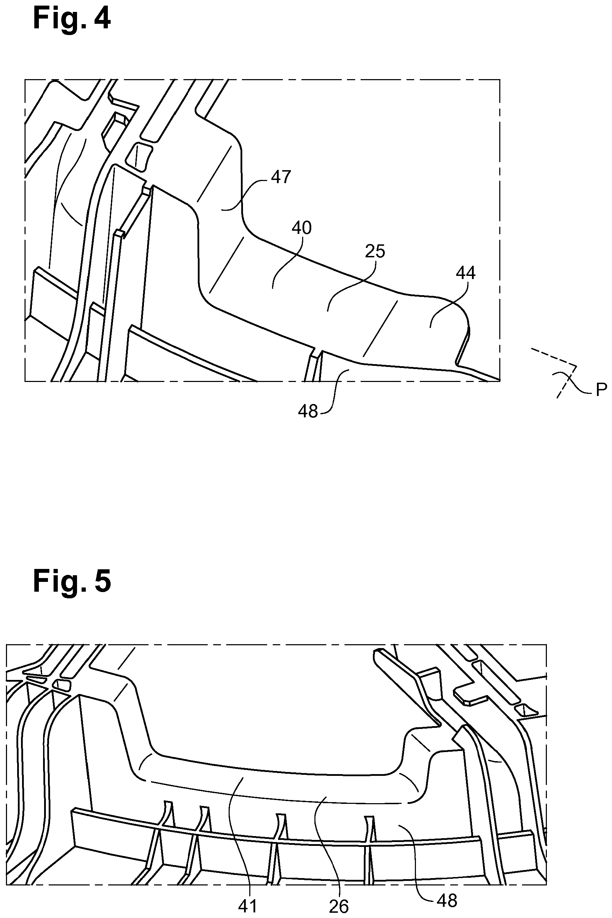

La face 40 du bouclier 40 s'étend sensiblement dans un plan P parallèle au plan de l'ouverture 33, comme illustré sur la figure 4.

L'autre face 41 du bouclier 26 présente une forme bombée par rapport au plan P de l'ouverture 33, comme visible sur la figure 5. Cette forme bombée présente une concavité tournée parallèlement au flux d'air.

Cette face 41 pourrait être plane et non bombée.

Le bouclier 25 présente une forme de languette, comme visible sur la figure 4, avec une extrémité relevée 44.

Chaque bras 30 comprend un côté 45 pourvu de nervures de renfort 46, comme visible sur la figure 2, et le bouclier 26 qui présente une forme de languette, se raccord à ce coté 45 du bras qui est muni de nervures de renfort 46.

Cette languette du bouclier 25 s'étend sensiblement le long de la bordure 35 de l'ouverture 33.

Le bouclier 25 comporte un décrochement 47 qui se raccorde sur un côté 45 du bras 30.

Le bouclier 25, selon les besoins, peut présenter une forme sensiblement choisie parmi : circulaire, polygonale, rectangulaire, carré ou toute autre forme.

Les boucliers 25 et 26 sont adjacents à une nervure annulaire 48, qui est notamment parallèle à l'axe transversale de l'ouverture, le long de la bordure de cette ouverture 33.

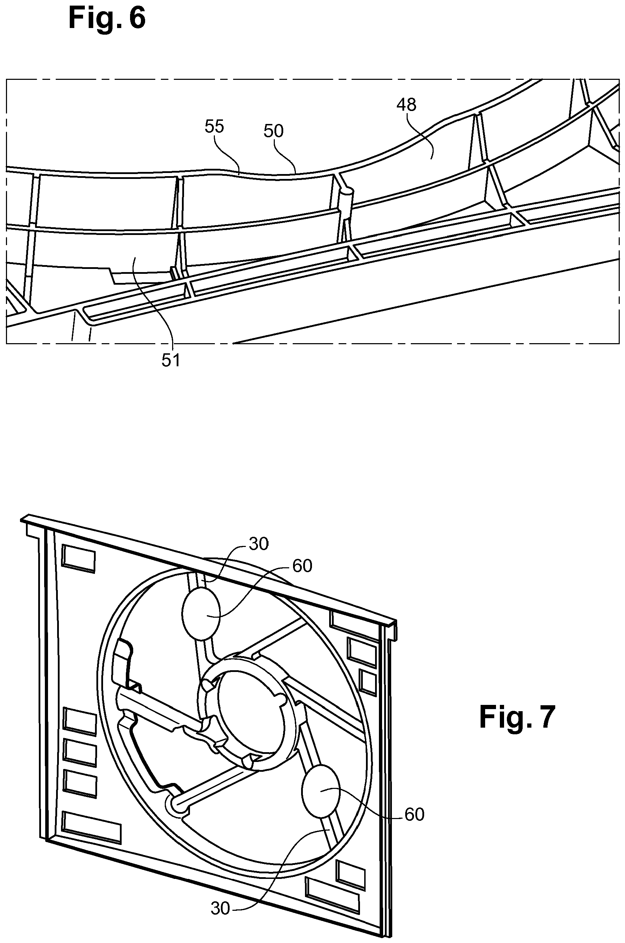

Comme illustré sur la figure 6, un élément 50 supplémentaire est formé sur la nervure annulaire 48, qui est parallèle à l'axe transversale de l'ouverture et s'étend le long de la bordure 35 de cette ouverture, cette nervure 48 présentant une hauteur surélevée, ou non, pour avoir un bon compromis entre des performance acoustiques et les performances aérauliques.

Cette nervure surélevée 48 est plus élevée en hauteur qu'une nervure concentrique voisine 51, de rayon plus grand. Cette nervure 48 présente des encoches 55.

Les nervures 48 et 51 peuvent en variante avoir la même hauteur.

Dans l'exemple illustré en figure 7 et non couvert par la revendication 1, le ou les boucliers 60 sont formés sur des bras 30, ici sur deux des 6 bras du support. Ces boucliers 60 sont espacés du logement 28 et de la bordure 35.

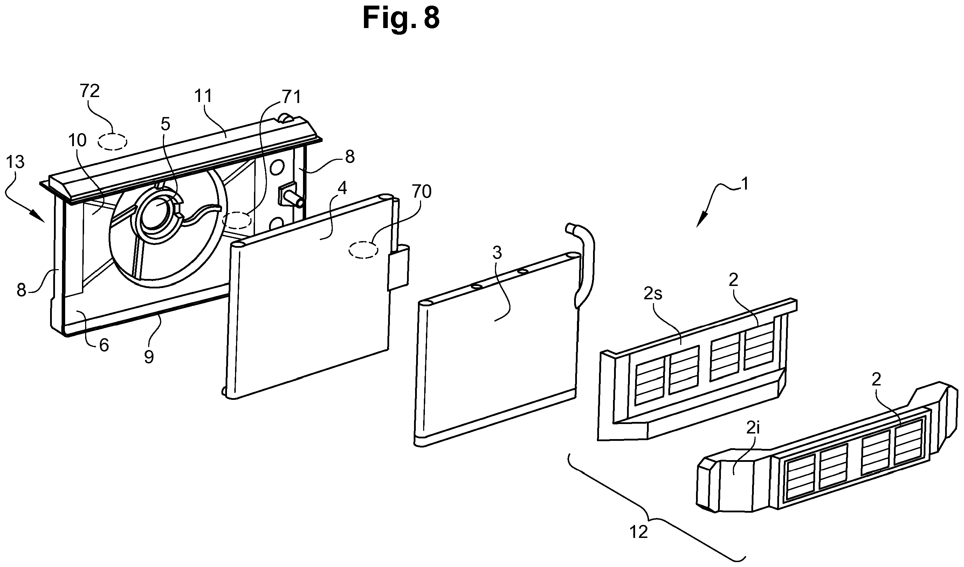

Comme on peut le voir sur la figure 8, selon un autre aspect de l'invention non couvert par la revendication 1, le bouclier anti-turbulences 70 est placé en amont du radiateur 4, qui est lui-même placé en amont du ventilateur.

En variante non couverte par la revendication 1, le bouclier anti-turbulences 71 est placé entre un échangeur de chaleur, notamment un radiateur 4, et le groupe moto-ventilateur, sans être formé directement sur le composant 13.

En variante encore et non couverte par la revendication 1, le bouclier anti-turbulences 72 est placé en aval d'un ventilateur, notamment entre le ventilateur et le support de groupe moto-ventilateur.

Dans ces cas non couverts par la revendication 1, le bouclier peut être une pièce rapportée, montée par exemple par encliquetage ou autre, et disposé dans ces différents emplacements.

## Revendications

1. Dispositif de ventilation (20) d'un véhicule automobile, ce dispositif (20) comportant :
- un passage d'air (21) pour de l'air mis en mouvement forcé, notamment par aspiration,
- au moins un bouclier anti-turbulences (25 ; 26 ; 60 ; 70 ; 71 ; 72) agencé pour être placé dans le passage d'air (21) en un endroit choisi de manière à empêcher des turbulences de se former,
- un support (13) de groupe moto-ventilateur (5), ce support (13) comportant :
o au moins un bras (30) de maintien mécanique du moteur, le bouclier (25 ; 26 ; 60 ; 70 ; 71 ; 72) étant agencé pour empêcher des turbulences de se former au contact de ce bras (30),
o un logement (28) pour recevoir le groupe moto-ventilateur (5),
o une région périphérique (29),
o au moins un bras (30) reliant le logement (28) à la région périphérique (29), notamment une pluralité de bras (30) reliant le logement (28) à la région périphérique (29),
la région périphérique (29) définit une ouverture (33) de forme sensiblement circulaire et le logement (28) pour le groupe moto-ventilateur (5) est disposé sensiblement au centre de cette ouverture (33), et cette ouverture (33) présente une bordure (35), notamment circulaire, le bouclier (25 ; 26 ; 60 ; 70 ; 71 ; 72) est adjacent à cette bordure (35) et dans lequel le bouclier (25 ; 26 ; 60 ; 70 ; 71 ; 72) est disposé entre deux bras (30) consécutifs et **caractérisé en ce que** le bouclier (25 ; 26 ; 60 ; 70 ; 71 ; 72) présente une forme de languette et la languette du bouclier (25 ; 26 ; 60 ; 70 ; 71 ; 72) s'étend sensiblement le long de la bordure (35) de l'ouverture (33).

2. Dispositif (20) selon la revendication précédente, dans lequel le bouclier anti-turbulences (25 ; 26 ; 60 ; 70 ; 71 ; 72) est formé sur le support (13) de groupe moto-ventilateur (5).

3. Dispositif (20) selon l'une des revendications précédentes, dans lequel le bouclier anti-turbulences (25 ; 26 ; 60 ; 70 ; 71 ; 72) est placé en amont d'un radiateur (4), qui est lui-même placé en amont du ventilateur.

4. Dispositif (20) selon la revendication 1, dans lequel certains bras (30) seulement sont munis d'un bouclier (25 ; 26 ; 60 ; 70 ; 71 ; 72), les autres en étant dépourvus.

5. Dispositif (20) selon l'une des revendications précédentes, dans lequel le bouclier (25 ; 26 ; 60 ; 70 ; 71 ; 72) est à une distance au moins égale à la distance entre le bras (30) et les pales du ventilateur.

6. Procédé pour empêcher des turbulences de se former, ce procédé comportant l'étape suivante :
- fournir un bouclier anti-turbulences (25 ; 26 ; 60 ; 70 ; 71 ; 72) de manière à empêcher des turbulences de se former dans un passage d'air (21) d'un dispositif de ventilation (20) d'un véhicule automobile selon l'une des revendications 1 à 5.

7. Procédé selon la revendication précédente, comportant l'étape suivante :
- identifier une ou plusieurs zones de fortes turbulences et de fortes vitesses d'air dans le passage d'air forcé (21), par exemple par simulation numérique ou par test réel,
- placer dans cette ou ces zones (Z) au moins un bouclier anti-turbulences (25 ; 26 ; 60 ; 70 ; 71 ; 72) de manière à empêcher des turbulences de se former ou à limiter ces turbulences dans cette zone ou ces zones (Z), de manière à réduire le bruit généré par la circulation d'air.

## Patentansprüche

1. Belüftungsvorrichtung (20) eines Kraftfahrzeugs, wobei diese Vorrichtung (20) umfasst:
- einen Luftdurchlass (21) für Luft, welche zwangsbewegt wird, insbesondere durch Ansaugung,
- mindestens eine Turbulenzabschirmung (25; 26; 60; 70; 71; 72), die dazu eingerichtet ist, in dem Luftdurchlass (21) an einer Stelle angeordnet zu werden, die so gewählt ist, dass eine Bildung von Turbulenzen verhindert wird,
- eine Halterung (13) einer Motor-Gebläse-Einheit (5), wobei diese Halterung (13) umfasst:
O mindestens einen mechanischen Haltearm (30) des Motors, wobei die Abschirmung (25; 26; 60; 70; 71; 72) dazu eingerichtet ist zu verhindern, dass sich im Kontakt mit diesem Arm (30) Turbulenzen bilden;
O einen Sitz (28) zum Aufnehmen der Motor-Gebläse-Einheit (5),
O einen Umfangsbereich (29),
O mindestens einen Arm (30), der den Sitz (28) mit dem Umfangsbereich (29) verbindet, insbesondere mehrere Arme (30), die den Sitz (28) mit dem Umfangsbereich (29) verbinden,
wobei der Umfangsbereich (29) eine im Wesentlichen kreisförmige Öffnung (33) definiert und der Sitz (28) für die Motor-Gebläse-Einheit (5) im Wesentlichen in der Mitte dieser Öffnung (33) angeordnet ist und diese Öffnung (33) einen Rand (35) aufweist, der insbesondere kreisförmig ist, wobei die Abschirmung (25; 26; 60; 70; 71; 72) diesem Rand (35) benachbart ist und wobei die Abschirmung (25; 26; 60; 70; 71; 72) zwischen zwei aufeinander folgenden Armen (30) angeordnet ist und **dadurch gekennzeichnet ist, dass** die Abschirmung (25; 26; 60; 70; 71; 72) eine Zungenform aufweist und die Zunge der Abschirmung (25; 26; 60; 70; 71; 72) sich im Wesentlichen entlang des Randes (35) der Öffnung (33) erstreckt.

2. Vorrichtung (20) nach dem vorhergehenden Anspruch, wobei die Turbulenzabschirmung (25; 26; 60; 70; 71; 72) an der Halterung (13) der Motor-Gebläse-Einheit (5) ausgebildet ist.

3. Vorrichtung (20) nach einem der vorhergehenden Ansprüche, wobei die Turbulenzabschirmung (25; 26; 60; 70; 71; 72) stromaufwärts eines Kühlers (4) angeordnet ist, der seinerseits stromaufwärts des Gebläses angeordnet ist.

4. Vorrichtung (20) nach Anspruch 1, wobei nur bestimmte Arme (30) mit einer Abschirmung (25; 26; 60; 70; 71; 72) ausgestattet sind, während die anderen nicht damit ausgestattet sind.

5. Vorrichtung (20) nach einem der vorhergehenden Ansprüche, wobei sich die Abschirmung (25; 26; 60; 70; 71; 72) in einem Abstand befindet, der mindestens gleich dem Abstand zwischen dem Arm (30) und den Flügeln des Gebläses ist.

6. Verfahren zum Verhindern der Bildung von Turbulenzen, wobei dieses Verfahren den folgenden Schritt umfasst:
- Bereitstellen einer Turbulenzabschirmung (25; 26; 60; 70; 71; 72), um so die Bildung von Turbulenzen in einem Luftdurchlass (21) einer Belüftungsvorrichtung (20) eines Kraftfahrzeugs nach einem der Ansprüche 1 bis 5 zu verhindern.

7. Verfahren nach dem vorhergehenden Anspruch, welches den folgenden Schritt umfasst:
- Identifizieren eines oder mehrerer Bereiche starker Turbulenzen und hoher Luftgeschwindigkeiten in dem Durchlass für zwangsbewegte Luft (21), zum Beispiel durch numerische Simulation oder durch echte Versuche,
- Anordnen mindestens einer Turbulenzabschirmung (25; 26; 60; 70; 71; 72) in diesem Bereich oder diesen Bereichen (Z), um so die Bildung von Turbulenzen zu verhindern oder diese Turbulenzen in diesem Bereich oder diesen Bereichen (Z) zu begrenzen, um das durch die Luftströmung erzeugte Geräusch zu reduzieren.

## Claims

1. Ventilation device (20) of a motor vehicle, this device (20) having:
- an air passage (21) for air set in forced movement, in particular by suction,
- at least one anti-turbulence shield (25; 26; 60; 70; 71; 72) arranged to be placed in the air passage (21) at a location chosen so as to prevent turbulence from forming,
- a support (13) for a motor-fan unit (5), this support (13) having:
O at least one arm (30) for mechanically holding the motor, the shield (25; 26; 60; 70; 71; 72) being arranged to prevent turbulence from forming upon contact with this arm (30),
O a housing (28) for receiving the motor-fan unit (5),
O a peripheral region (29),
O at least one arm (30) connecting the housing (28) to the peripheral region (29), in particular a plurality of arms (30) connecting the housing (28) to the peripheral region (29),
the peripheral region (29) defines an opening (33) of substantially circular shape and the housing (28) for the motor-fan unit (5) is disposed substantially in the centre of this opening (33), and this opening (33) has a border (35), which is in particular circular, the shield (25; 26; 60; 70; 71; 72) is adjacent to this border (35) and wherein the shield (25; 26; 60; 70; 71; 72) is disposed between two consecutive arms (30) and **characterized in that** the shield (25; 26; 60; 70; 71; 72) has a tongue shape and the tongue of the shield (25; 26; 60; 70; 71; 72) extends substantially along the border (35) of the opening (33).

2. Device (20) according to the preceding claim, wherein the anti-turbulence shield (25; 26; 60; 70; 71; 72) is formed on the support (13) for the motor-fan unit (5) .

3. Device (20) according to one of the preceding claims, wherein the anti-turbulence shield (25; 26; 60; 70; 71; 72) is placed upstream of a radiator (4), which is itself placed upstream of the fan.

4. Device (20) according to Claim 1, wherein only certain arms (30) are provided with a shield (25; 26; 60; 70; 71; 72), the others being devoid thereof.

5. Device (20) according to one of the preceding claims, wherein the shield (25; 26; 60; 70; 71; 72) is at a distance at least equal to the distance between the arm (30) and the blades of the fan.

6. Method for preventing turbulence from forming, this method involving the following step:
- providing an anti-turbulence shield (25; 26; 60; 70; 71; 72) so as to prevent turbulence from forming in an air passage (21) of a ventilation device (20) of a motor vehicle according to one of Claims 1 to 5.

7. Method according to the preceding claim, involving the following step:
- identifying one or more areas of strong turbulence and high air velocities in the forced air passage (21), for example by numerical simulation or by real-life testing,
- placing at least one anti-turbulence shield (25; 26; 60; 70; 71; 72) in this or these zones (Z) so as to prevent turbulence from forming or to limit this turbulence in this zone or these zones (Z), so as to reduce the noise generated by the circulation of air.
